# EUROPEAN PATENT APPLICATION

(11) **EP 3 975 094 A1**
(43) Date of publication of application: **30.03.2022**
(21) Application number: 21177500.2
(22) Date of filing: 02.06.2021
(51) Int. Cl.: G06Q 30/00, G06Q 10/08

(54) **INFORMATION PROCESSING APPARATUS AND PROGRAM**

(30) Priority: 23.09.2020 JP 2020158665
(71) Applicant: Toshiba Tec Kabushiki Kaisha, Shinagawa-ku Tokyo 141-8562 (JP)
(72) Inventor: Nagata, Hiroto, Shinagawa-ku, Tokyo 141-8562 (JP)
(74) Representative: Bandpay & Greuter

(57) **Abstract**

An information processing apparatus of an embodiment includes merchandise determination means for determining whether or not merchandise for which merchandise identification information for identification of the merchandise is acquired is merchandise in increasing demand having a number of sales remarkably increasing within a fixed period, threshold determination means for determining whether or not the number of sales of the merchandise in increasing demand to a same customer is equal to or smaller than a threshold if the merchandise is determined as being the merchandise in increasing demand, and sales control means for performing a sales data process on the merchandise if the number of sales is determined as being equal to or smaller than the threshold, and outputting information representing a ban on a sale of the merchandise to the same customer if the number of sales is determined as being larger than the threshold.

## Description

### FIELD

Embodiments described herein relate to an information processing apparatus and a program.

### BACKGROUND

Of merchandise sold in stores such as supermarkets and convenience stores, sometimes, the number of sold specific merchandise (sales) suddenly increases due to sharp increase in demand. The merchandise in increasing demand may be bought up and some people may purchase the merchandise in bulk.

To prevent buy-up for the merchandise in increasing demand, a store limits the number of sales per person to a threshold or less, and a store clerk or the like sells the merchandise in increasing demand while controlling not to exceed the limited number.

However, the store clerk is often in charge of the control of the limited number and hard to sell the merchandise in increasing demand in the limited number or less.

### DESCRIPTION OF THE DRAWINGS

FIG. 1 is an explanatory diagram of a system of an embodiment.
FIG. 2 is a block diagram showing a hardware configuration of a server.
FIG. 3 is a memory map showing a configuration of a sales data part.
FIG. 4 is a memory map showing a configuration of a sales management part.
FIG. 5 is a memory map showing a configuration of a customer master.
FIG. 6 is a block diagram showing a hardware configuration of a POS terminal.
FIG. 7 is a flowchart showing a flow of a control process of the server.
FIG. 8 is a functional block diagram showing a functional configuration of the POS terminal.
FIG. 9 is a flowchart showing a control process of the POS terminal.

### DETAILED DESCRIPTION

A challenge to be solved is to provide an information processing apparatus and a program that enable selling of merchandise in increasing demand in the number of sales equal to or smaller than a threshold.

An information processing apparatus of an embodiment includes merchandise determination means for determining whether or not merchandise for which merchandise identification information for identification of the merchandise is acquired is merchandise in increasing demand having a number of sales remarkably increasing within a fixed period, threshold determination means for determining whether or not the number of sales of the merchandise in increasing demand to a same customer is equal to or smaller than a threshold if the merchandise is determined as being the merchandise in increasing demand, and sales control means for performing a sales data process on the merchandise if the number of sales is determined as being equal to or smaller than the threshold, and outputting information representing a ban on a sale of the merchandise to the same customer if the number of sales is determined as being larger than the threshold.

Preferably, the threshold determination means determines whether or not the number of sales of the merchandise in increasing demand is equal to or smaller than the threshold by comparing the number of the merchandise in increasing demand already subjected to a sales data process in single transaction with the threshold.

Preferably, the threshold determination means determines whether or not the number of sales of the merchandise in increasing demand is equal to or smaller than the threshold by further comparing a number of purchases of the customer within a first predetermined period relating to the merchandise in increasing demand with the threshold.

Preferably, the sales control means outputs information representing a stop of the sale of the merchandise in increasing demand to the customer if a number of visits of the customer within the first predetermined period exceeds a predetermined number of times.

Preferably, the merchandise determination means compares numbers of sales of the merchandise in the first predetermined period and a preceding second predetermined period and determines that the merchandise is merchandise in increasing demand if the number of sales of the merchandise in the first predetermined period increases compared to the number of sales of the merchandise in the second predetermined period.

Preferably, the information processing apparatus further comprises a POS terminal.

Preferably, the information processing apparatus further comprises a plurality of POS terminals.

There is also provided a method of controlling sales, comprising: merchandise determining, by a system comprising a processor, whether or not merchandise for which merchandise identification information for identification of the merchandise is acquired is merchandise in increasing demand having a number of sales increase within a fixed period; threshold determining, by the system comprising a processor, whether or not the number of sales of the merchandise in increasing demand to a customer is equal to or smaller than a threshold if the merchandise is determined as being the merchandise in increasing demand; and sales controlling, by the system comprising a processor, by performing a sales data process on the merchandise if the number of sales is determined as being equal to or smaller than the threshold, and outputting information representing a ban on a sale of the merchandise to the customer if the number of sales is determined as being larger than the threshold.

Preferably, the method further comprises determining, by the system comprising a processor, whether or not the number of sales of the merchandise in increasing demand is equal to or smaller than the threshold by comparing the number of the merchandise in increasing demand already subjected to a sales data process in single transaction with the threshold.

Preferably, the method further comprises determining, by the system comprising a processor, whether or not the number of sales of the merchandise in increasing demand is equal to or smaller than the threshold by further comparing a number of purchases of the customer within a first predetermined period relating to the merchandise in increasing demand with the threshold.

Preferably, the method further comprises outputting, by the system comprising a processor, information representing a stop of the sale of the merchandise in increasing demand to the customer if a number of visits of the customer within the first predetermined period exceeds a predetermined number of times.

Preferably, the method further comprises comparing, by the system comprising a processor, numbers of sales of the merchandise in the first predetermined period and a preceding second predetermined period and determines that the merchandise is merchandise in increasing demand if the number of sales of the merchandise in the first predetermined period increases compared to the number of sales of the merchandise in the second predetermined period.

There is also provided a system for controlling sales, comprising the above-described information processing apparatus and at least one checkout apparatus configured to process merchandise sales.

Preferably, the checkout apparatus is a POS terminal.

Preferably, the system further comprises a plurality of checkout apparatuses.

As below, an embodiment will be explained with reference to the drawings. In the embodiment, a POS terminal will be explained as an example of an information processing apparatus. Note that any limitation is not imposed by the following embodiment.

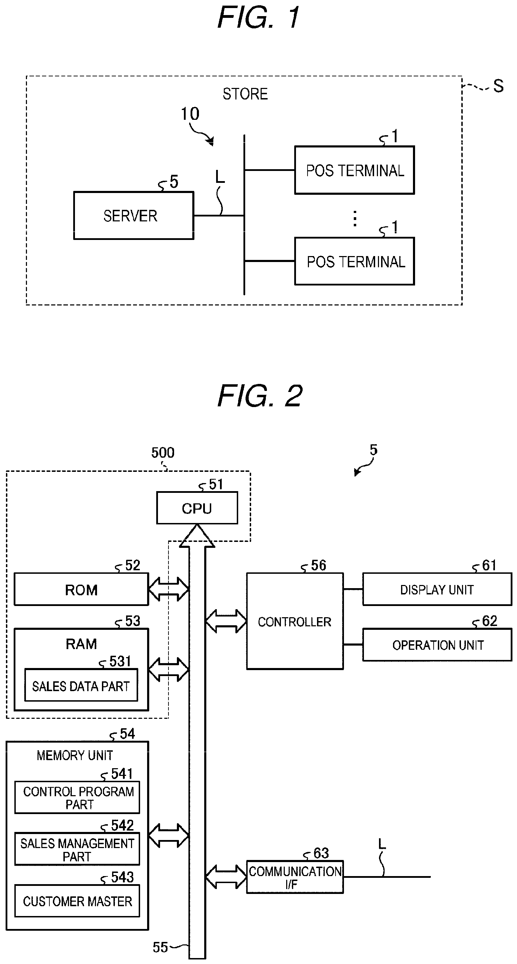

FIG. 1 contains a system 10 of the embodiment. As shown in FIG. 1, the system 10 includes one or more POS terminals 1 installed within a store S and a server 5. For example, the POS terminals 1 and the server 5 are connected by a communication line L such as a LAN (Local Area Network). The POS terminal 1 in the embodiment is a self-service type POS terminal for sales registration operation and settlement operation of merchandise by a customer him- or herself.

The POS terminals 1 are installed in a checkout section in the store S. The POS terminal 1 includes a registration unit for reading a symbol such as a barcode or two-dimensional code attached to merchandise to be purchased, and a settlement unit for settlement operation based on merchandise information corresponding to the read symbol. The customer him- or herself performs both the sales registration operation in the registration unit and the settlement operation in the settlement unit.

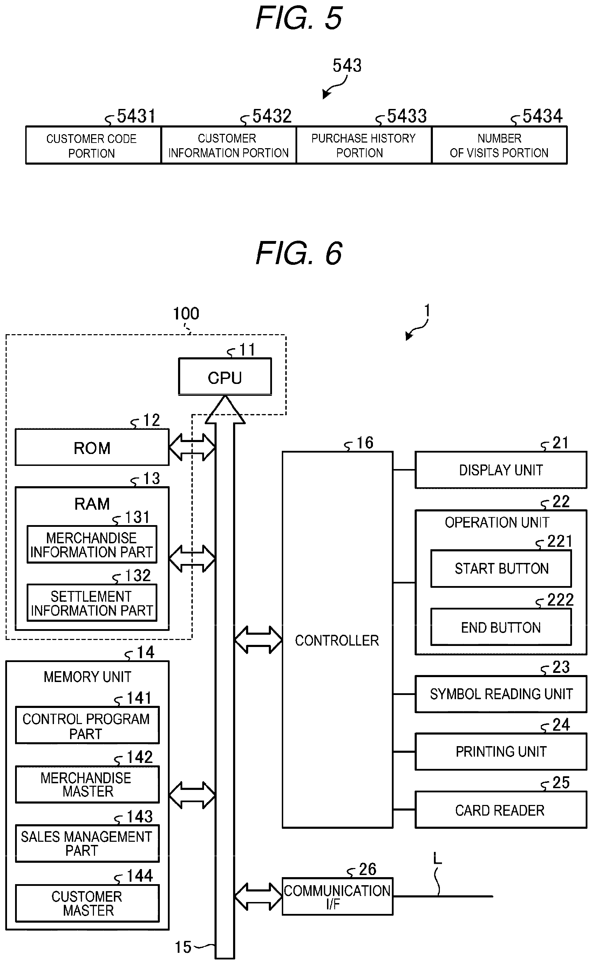

The customer operates a start button 221 (see FIG. 6). Then, the customer performs the sales registration operation to image or optically read the symbol attached to the merchandise using the registration unit. The POS terminal 1 executes a sales data process based on the sales registration operation by the customer. After the sales registration operation of all merchandise items to be purchased, the customer operates an end button 222 (see FIG. 6), inputs a customer code for identification of the customer using e.g. a customer card or the like, and performs the settlement operation. The POS terminal 1 executes a settlement process based on the settlement operation by the customer.

Here, the sales data process refers to a process to display merchandise information including the name and the price of the merchandise based on the merchandise code input by an analysis of the symbol read by the customer and store the merchandise information in a merchandise information part 131 (see FIG. 6). The settlement process refers to a process to display a total amount and a change amount relating to a transaction with the customer based on the merchandise information subjected to the sales data process. When the settlement process is performed on the merchandise subjected to the sales data process, the POS terminal 1 transmits the merchandise information, settlement information, the customer code, etc. of the merchandise to the server 5.

The POS terminal 1 limits the number of sales for the same customer when the merchandise to be purchased by the customer is merchandise in increasing demand. The merchandise in increasing demand refers to merchandise in sharply increasing demand. The demand for the merchandise increases and many customers are desired to purchase the merchandise. The sharp increase in demand refers to a sharp increase in the number of sales in a fixed period (e.g. one day, one week, or the like). In the embodiment, one day is an example of the fixed period in the following explanation.

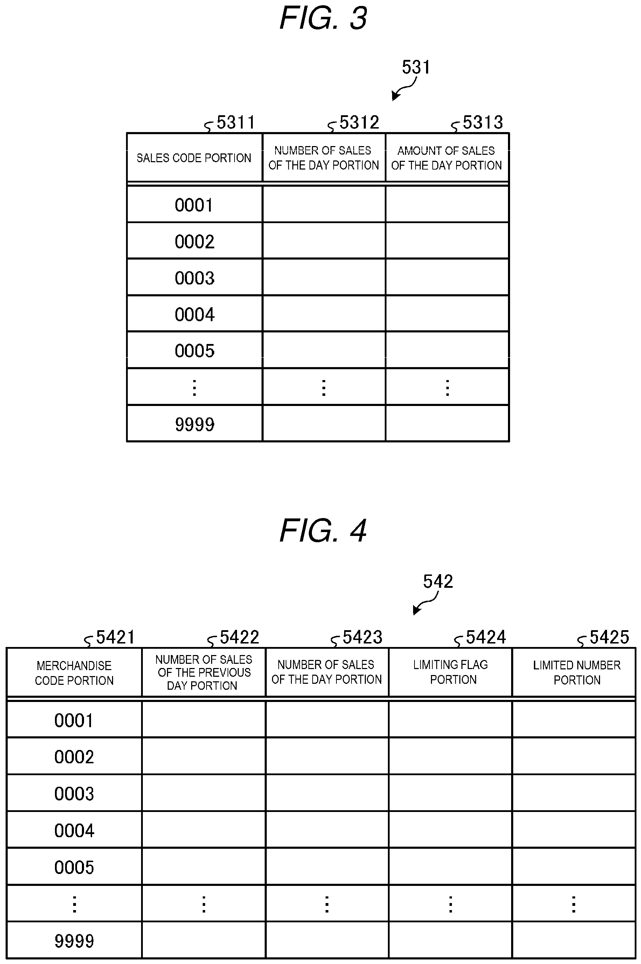

The server 5 as a store server is installed in e.g. a backyard of the store S. The server 5 updates a sales data part 531 (see FIGS. 2 and 3) based on the merchandise information, the settlement information, and the customer code received from the POS terminal 1. The sales data part 531 manages sales data of the merchandise in the store S in a first predetermined period (e.g. one day). The sales data part 531 will be described later with reference to FIG. 3. The POS terminal 1 is controlled not to sell the merchandise in increasing demand in a number over a threshold as a limited number in the first predetermined period.

The server 5 collects the settlement information from the respective POS terminals 1 installed in the store S and compares the number of sales of the day (first predetermined period) and the number of sales of the previous day (second predetermined period) of the merchandise. Then, the merchandise having the number of sales of the day sharply increasing at a rate to the number of sales of the previous day over a predetermined rate (e.g. twice, three times, or the like) is designated as merchandise in increasing demand. The predetermined rate may be set in the server 5 according to situations of the store S.

The server 5 stores a threshold at which the merchandise in increasing demand can be sold to the same customer and transmits information on designation as the merchandise in increasing demand and information on the threshold of the merchandise to the POS terminal 1.

Next, a hardware configuration of the server 5 of the embodiment will be explained using FIG. 2. As shown in FIG. 2, the server 5 includes a CPU (Central Processing Unit) 51, a ROM (Read Only Memory) 52, a RAM (Random Access Memory) 53, a memory unit 54, etc. The CPU 51 serves as a control main body. The ROM 52 stores various programs. The RAM 53 loads the programs and various data. The memory unit 54 stores various programs. The CPU 51, the ROM 52, the RAM 53, and the memory unit 54 are connected to one another via a bus 55. The CPU 51, the ROM 52, and the RAM 53 form a control unit 500. That is, the control unit 500 operates according to a control program stored in the ROM 52 or the memory unit 54 and loaded in the RAM 53, and thereby, executes a control process of the server 5, which will be described later.

The RAM 53 includes the sales data part 531. The sales data part 531 cumulatively stores sales data of merchandise items (numbers of sales, amounts of sales, etc. of the respective merchandise items) in the store S based on merchandise information and settlement information on the merchandise items received from the respective POS terminals 1. The sales data part 531 will be described later with reference to FIG. 3.

The memory unit 54 includes an HDD (Hard Disc Drive) or a flash memory and maintains memory contents even when power is turned off. The memory unit 54 includes a control program part 541, a sales management part 542, and a customer master 543. The control program part 541 stores the control program for controlling the server 5.

The sales management part 542 stores the numbers of sales and the amounts of sales of the merchandise items at the store S in a first predetermined period (e.g. for one day on the day) on a per merchandise item basis. Further, the sales management part 542 stores the numbers of sales and the amounts of sales of the merchandise items at the store S in a second predetermined period (e.g. for one day on the previous day) on a per merchandise item basis. In the embodiment, the second predetermined period is one day as the previous day to the first predetermined period. Note that the first predetermined period may be another period than one day (e.g. one week). In this case, the second predetermined period is one week as the previous week to the first predetermined period. The sales management part 542 will be described later with reference to FIG. 4. The first predetermined period and the second predetermined period desirably have the same lengths.

The customer master 543 stores information on customers including customer codes (customer identification information) for identification of customers. The customer master 543 will be described later with reference to FIG. 5.

The control unit 500 connects to a display unit 61 and an operation unit 62 via the bus 55 and a controller 56. The display unit 61 displays information to an operator operating the server 5. The operation unit 62 is a keyboard.

Further, the control unit 500 is connected to a communication interface (I/F) 63 via the bus 55. The communication interface 63 connects to the respective POS terminals 1 installed in the store S via the communication line L and transmits and receives information.

Next, the sales data part 531 is explained. FIG. 3 is a memory map showing a configuration of the sales data part 531. As shown in FIG. 3, the sales data part 531 has a sales code portion 5311, a number of sales of the day portion 5312, and an amount of sales of the day portion 5313. The sales code portion 5311 stores merchandise codes (merchandise identification information) for identification of merchandise items on a per merchandise item to be sold at the store S basis. The number of sales of the day portion 5312 stores the numbers of sales of the merchandise sold at the store S in the day (within a fixed period) on a per merchandise item basis in correlation to the merchandise codes stored in the sales code portion 5311. The amount of sales of the day portion 5313 stores the amounts of sales of the merchandise sold at the store S in the day (within a fixed period) on a per merchandise item basis in correlation to the merchandise codes stored in the sales code portion 5311. The sales data part 531 is used for e.g. sales management at the store S for one day.

Next, the sales management part 542 is explained. FIG. 4 is a memory map showing a configuration of the sales management part 542. As shown in FIG. 4, the sales management part 542 has a merchandise code portion 5421, a number of sales of the previous day portion 5422, a number of sales of the day portion 5423, a limiting flag portion 5424, and a limited number portion 5425. The merchandise code portion 5421 stores merchandise codes (merchandise identification information) for identification of merchandise items on a per merchandise item to be sold at the store S basis. The number of sales of the previous day portion 5422 stores the numbers of sales of the merchandise items in the previous day (second predetermined period) on a per merchandise item basis in correlation to the merchandise codes stored in the sales code portion 5421. The number of sales of the day portion 5423 stores the numbers of sales of the merchandise items sold at the store S in the day (first predetermined period) on a per merchandise item basis in correlation to the merchandise codes stored in the sales code portion 5421.

The limiting flag portion 5424 sets a limiting flag "1" when a rate of the number of sales of the merchandise stored in the number of sales of the day portion 5423 to the number of sales of the merchandise stored in the number of sales of the previous day portion 5422 exceeds a predetermined rate set in advance based on the number of sales of the merchandise stored in the number of sales of the previous day portion 5422 and the number of sales of the merchandise stored in the number of sales of the day portion 5423 in correlation to the merchandise code stored in the merchandise code portion 5421. That is, the merchandise for which the limiting flag "1" is set in the limiting flag portion 5424 is the merchandise having the number of sales of the day remarkably increasing from the number of sales of the previous day, the merchandise in increasing demand. Or, the merchandise for which the limiting flag "0" is set in the limiting flag portion 5424 is the merchandise having the number of sales of the day not remarkably increasing from the number of sales of the previous day, not the merchandise in increasing demand.

The limited number portion 5425 stores an upper limit number (threshold) that can be sold to the same customer within the first predetermined period when the merchandise is the merchandise in increasing demand in correlation to the merchandise code stored in the merchandise code portion 5421. The threshold stored in the limited number portion 5425 is also an upper limit number that may be sold in single transaction to the customer. That is, the same customer may purchase the merchandise in increasing demand in the number equal to or smaller than the threshold within the first predetermined period. Further, the customer may purchase the merchandise in increasing demand in the number equal to or smaller than the threshold in single transaction. For example, when purchasing the merchandise in increasing demand in the number equal to or smaller than the threshold in single transaction, the customer may further purchase the merchandise in increasing demand in the number up to the threshold within the first predetermined period, however, may not purchase the merchandise in increasing demand in the number exceeding the threshold. For example, when a threshold of certain merchandise in increasing demand is ten, if the customer purchases the merchandise in increasing demand in the number of six in single transaction, the customer may purchase the merchandise in increasing demand in the number up to four within the first predetermined period.

Next, the customer master 543 is explained. FIG. 5 is a memory map showing a configuration of the customer master 543. As shown in FIG. 5, the customer master 543 has a customer code portion 5431, a customer information portion 5432, a purchase history portion 5433, and a number of visits portion 5434. The customer code portion 5431 stores customer codes (customer identification information) for identification of customers. The customer information portion 5432 stores customer information (customer names, addresses, phone numbers, mail addresses, etc.) relating to the customers identified by the customer codes stored in the customer code portion 5431 on a per customer basis. The purchase history portion 5433 stores histories of purchase of merchandise by the customers identified by the customer codes stored in the customer code portion 5431. That is, the numbers of merchandise in increasing demand purchased by the customers in the first predetermined period may be known on a per merchandise item in increasing demand from the purchase histories stored in the purchase history portion 5433. The number of visits portion 5434 stores the numbers of visits at the store in the first predetermined period of the customers identified by the customer codes stored in the customer code portion 5431.

Here, a hardware configuration of the POS terminal 1 is explained. FIG. 6 is a block diagram showing the hardware configuration of the POS terminal 1. As shown in FIG. 6, the POS terminal 1 includes a CPU 11, a ROM 12, a RAM 13, a memory unit 14, etc. The CPU 11 serves as a control main body. The ROM 12 stores various programs. The RAM 13 loads the programs and various data. The memory unit 14 stores various programs. The CPU 11, the ROM 12, the RAM 13, and the memory unit 14 are connected to one another via a bus 15. The CPU 11, the ROM 12, and the RAM 13 form a control unit 100. That is, the control unit 100 operates according to a control program stored in the ROM 12 or the memory unit 14 and loaded in the RAM 13, and thereby, executes a control process of the POS terminal 1, which will be described later.

The RAM 13 includes the merchandise information part 131 and a settlement information part 132. The merchandise information part 131 stores merchandise information acquired from a merchandise master 142 with respect to merchandise subjected to the sales data process based on the merchandise code acquired based on the read symbol in single transaction. The settlement information part 132 stores settlement information subjected to the settlement process in single transaction.

The memory unit 14 includes an HDD or a flash memory and maintains memory contents even when power is turned off. The memory unit 14 includes a control program part 141, the merchandise master 142, a sales management part 143, and a customer master 144. The control program part 141 stores the control program for controlling the POS terminal 1. The merchandise master 142 stores merchandise information including merchandise names, unit prices, etc. of the merchandise on a per merchandise code basis. The sales management part 143 stores the same information as that of the sales management part 542 of the server 5. The POS terminal 1 receives information of the sales management part 542 from the server 5 at a predetermined time (e.g. once a day) and stores the information as the sales management part 143. Note that, in the sales management part 143, a merchandise code portion 1431 corresponds to the merchandise code portion 5421, a number of sales of the previous day portion 1432 corresponds to the number of sales of the previous day portion 5422, a number of sales of the day portion 1433 corresponds to the number of sales of the day portion 5423, a limiting flag portion 1434 corresponds to the limiting flag portion 5424, and a limited number portion 1435 corresponds to the limited number portion 5425 (see FIG. 4). The customer master 144 stores the same information as that of the customer master 543 of the server 5. The POS terminal 1 receives information of the customer master 543 from the server 5 at a predetermined time (e.g. once a day) and stores the information as the customer master 144. Note that, in the customer master 144, a customer code portion 1441 corresponds to the customer code portion 5431, a customer information portion 1442 corresponds to the customer information portion 5432, a purchase history portion 1443 corresponds to the purchase history portion 5433, and a number of visits portion 1444 corresponds to the number of visits portion 5434 (see FIG. 5).

The control unit 100 connects to a display unit 21, an operation unit 22, a symbol reading unit 23, a printing unit 24, and a card reader 25 via the bus 15 and a controller 16. The display unit 21 displays merchandise information, settlement information, etc. to an operator (customer) operating the POS terminal 1. The operation unit 22 is a keyboard with touch keys including the start button 221 and the end button 222 etc. operated by the operator (customer). The start button 221 is operated by the customer when the customer starts sales registration operation in the POS terminal 1. The end button 222 is operated by the customer when the sales registration operation to read the symbols of all merchandise items to be purchased ends and the process moves to the settlement operation. The symbol reading unit 23 has e.g. an imaging unit such as a camera and images and reads the symbol. The symbol reading unit 23 may read the symbol by receiving light illuminated to the symbol. The card reader 25 is operated when the customer code for identification of the customer is read from the customer card, for example.

Further, the control unit 100 is connected to a communication interface (I/F) 26 via the bus 15. The communication interface 26 connects to the server 5 via the communication line L and transmits and receives information.

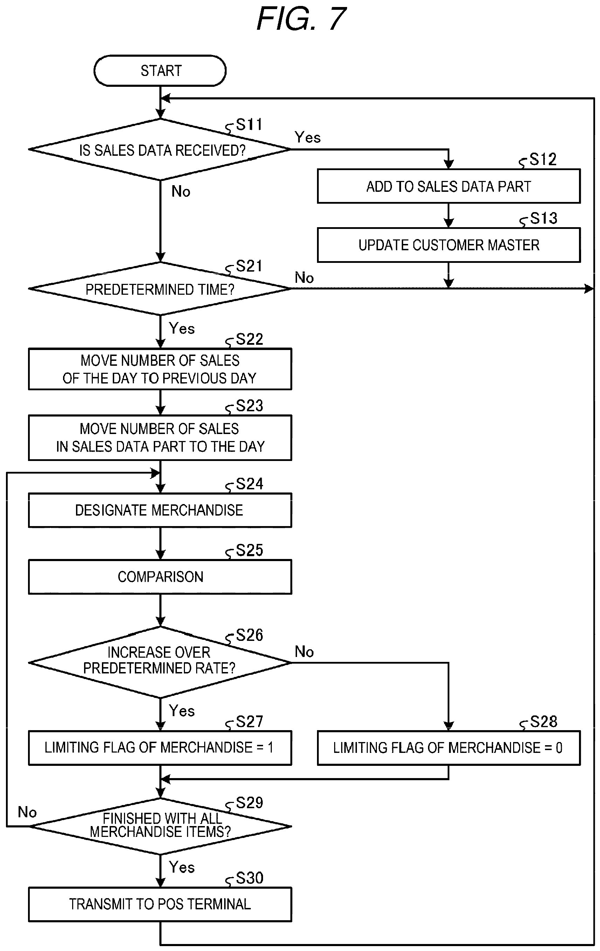

Here, the control by the server 5 is explained. FIG. 7 is a flowchart showing a flow of the control process of the server 5. As shown in FIG. 7, the control unit 500 of the server 5 determines whether or not sales data (including merchandise information and settlement information) is received from the POS terminal 1 (Act 11). If determining that sales data is received (Yes at Act 11), the control unit 500 adds the received sales data to the sales data part 531 (Act 12). That is, the control unit 500 adds the received number of sales of the merchandise to the number of sales of the day portion 5312 corresponding to the merchandise code of the merchandise and the received amount of sales of the merchandise to the amount of sales of the day portion 5313 corresponding to the merchandise code of the merchandise. Further, the control unit 500 updates the purchase history stored in the purchase history portion 5433 of the customer master 543 based on the received sales data (Act 13). Specifically, the control unit 500 adds the received number of sales of the merchandise to the number of sales of the merchandise of the day (first predetermined period) stored in the purchase history portion 5433. Furthermore, the control unit 500 adds the number of visits of the day (first predetermined period) on a per customer basis. Then, the control unit 500 returns to Act 11.

If determining that sales data is not received (No at Act 11), the control unit 500 determines whether or not the time is a predetermined time (Act 21). The predetermined time is a time set by the store S e.g. on the hour every hour at the store S. When determining that the time is the predetermined time (Yes at Act 21), the control unit 500 overwrites information of the number of sales of the day on a per merchandise item basis stored in the number of sales of the day portion 5423 in the number of sales of the previous day portion 5422 (Act 22). In this regard, the data already stored in the number of sales of the previous day portion 5422 is deleted. Then, the control unit 500 overwrites information of the number of sales of the day on a per merchandise item basis stored in the number of sales of the day portion 5312 in the number of sales of the day portion 5423 (Act 23). In this regard, the data already stored in the number of sales of the day portion 5423 is deleted. Under the condition, the number of sales of the merchandise of the previous day is stored in the number of sales of the previous day portion 5422 on a per merchandise item basis. Further, the number of sales of the merchandise of the day is stored in the number of sales of the day portion 5423 on a per merchandise item basis.

Then, the control unit 500 designates a single merchandise item. Then, the control unit 500 compares the number of sales stored in the number of sales of the previous day portion 5422 to the number of sales stored in the number of sales of the day portion 5423 with respect to the merchandise (Act 25). Then, the control unit 500 determines whether or not the number of sales stored in the number of sales of the day portion 5423 remarkably increases at a rate to the number of sales stored in the number of sales of the previous day portion 5422 over a predetermined rate (Act 26). If determining that the number remarkably increases over the predetermined rate (Yes at Act 26), the control unit 500 sets the limiting flag " 1" in the limiting flag portion 5424 relating to the merchandise (Act 27). On the other hand, if determining that the number does not remarkably increase over the predetermined rate (No at Act 26), the control unit 500 sets the limiting flag "0" in the limiting flag portion 5424 relating to the merchandise (Act 28).

Then, the control unit 500 determines whether or not all merchandise items stored in the number of sales of the previous day portion 5422 and the number of sales of the day portion 5423 are designated (Act 29). If determining that not all merchandise items are designated (No at Act 29), the control unit 500 returns to Act 24 and executes the processes and the determinations at Act 24 to Act 28 with respect to the next merchandise item. Or, if determining that all merchandise items are designated (Yes at Act 29), the control unit 500 transmits the information of the sales management part 542 and the information of the customer master 543 to the respective POS terminals 1 (Act 30). Then, the control unit 500 returns to Act 11.

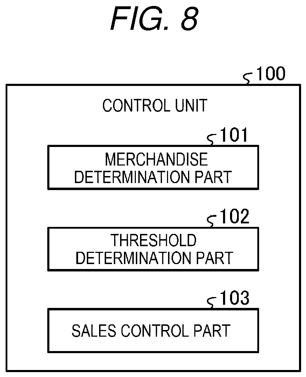

Here, a functional configuration of the POS terminal 1 is explained. FIG. 8 is a functional block diagram showing the functional configuration of the POS terminal 1. The control unit 100 functions as a merchandise determination part 101, a threshold determination part 102, and a sales control part 103 according to the control program stored in the ROM 12 or the memory unit 14 and loaded in the RAM 13.

The merchandise determination part 101 determines whether or not the merchandise is merchandise in increasing demand having the number of sales remarkably increasing within a fixed period by acquiring the merchandise code for identification of the merchandise. Specifically, the merchandise determination part 101 determines whether or not the merchandise identified by the merchandise code acquired based on the input symbol is merchandise in increasing demand having the number of sales of the day (first predetermined period) stored in the number of sales of the day portion 1433 increasing from the number of sales of the previous day (second predetermined period) stored in the number of sales of the previous day portion 1432 at a rate exceeding the predetermined rate. More specifically, the merchandise determination part 101 determines whether or not the merchandise is the merchandise in increasing demand based on whether the limiting flag " 1" is stored or the limiting flag "0" is stored in the limiting flag portion 1434 relating to the merchandise. If the limiting flag " 1" is stored, the merchandise determination part 101 determines that the merchandise is the merchandise in increasing demand. If the limiting flag "0" is stored, the merchandise determination part 101 determines that the merchandise is not the merchandise in increasing demand.

If the merchandise determination part 101 determines that the merchandise is the merchandise in increasing demand, the threshold determination part 102 determines whether or not the number of sales of the merchandise in increasing demand is equal to or smaller than the threshold. Specifically, if the merchandise determination part 101 determines that the merchandise is the merchandise in increasing demand, the threshold determination part 102 determines whether or not the number of sales of the merchandise to the same customer is equal to or smaller than the threshold (the upper limit number of sales) stored in the limited number portion 1435. The threshold includes the upper limit value in single transaction (single shopping) and the upper limit value in the first predetermined period and, in the embodiment, both upper limit values are set to the same numeric value (that is, the thresholds are the same value). One kind of threshold is stored in the limited number portion 1435. However, the threshold in single transaction and the threshold in the first predetermined period may be set to different values. In this case, the threshold in single transaction and the threshold in the first predetermined period are respectively stored in the limited number portion 1435. Typically, the threshold in single transaction < the threshold in the first predetermined period are stored. For example, when the threshold in single transaction is five and the threshold in the first predetermined period is ten, the merchandise in increasing demand can be purchased up to five in single shopping and can be purchased up to ten in the first predetermined period. The merchandise determination part 101 makes one of or both a determination as to whether or not the number of sales is equal to or smaller than the threshold in single transaction and a determination as to whether or not the number of sales is equal to or smaller than the threshold in the first predetermined period.

If the threshold determination part 102 determines that the number of sales is equal to or smaller than the threshold, the sales control part 103 performs the sales data process on the merchandise and, if the threshold determination part 102 determines that the number of sales is larger than the threshold, outputs information representing a ban on the sale of the merchandise to the same customer. Specifically, if the threshold determination part 102 determines that the number of sales is equal to or smaller than the threshold, the sales control part 103 performs the sales data process on the merchandise and, if the threshold determination part 102 determines that the number of sales is larger than the threshold, displays a message of a ban on the sale of the merchandise to the same customer and does not perform the sales data process on the merchandise.

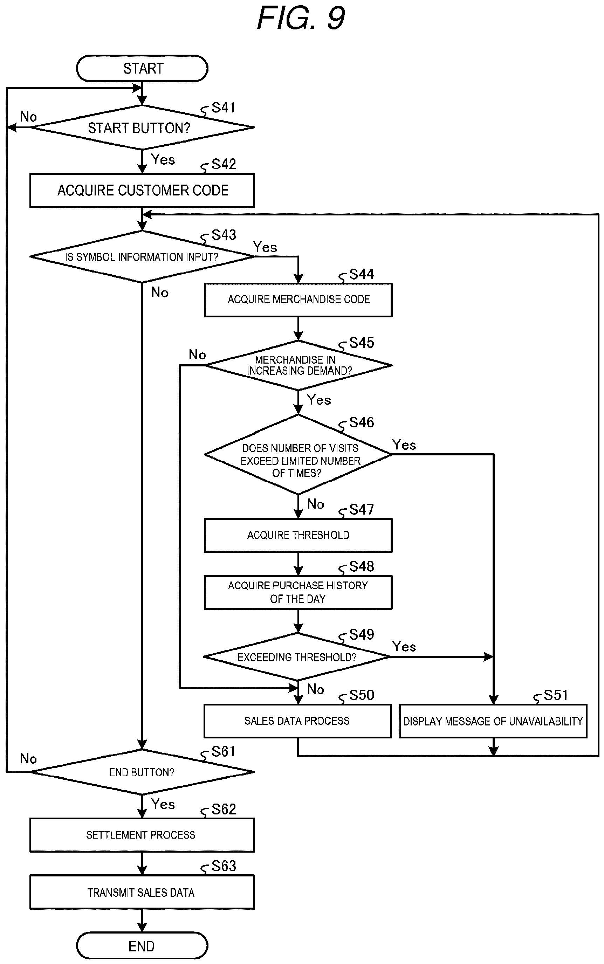

Here, the control of the POS terminal 1 is explained. FIG. 9 is a flowchart showing the control process of the POS terminal 1. As shown in FIG. 9, the control unit 100 of the POS terminal 1 determines whether or not the start button 221 is operated (Act 41). The control unit waits until the start button 221 is operated (No at Act 41) and, if determining that the start button 221 is operated (Yes at Act 41), acquires the customer code stored in the customer card from the card reader 25 (Act 42).

Then, the control unit 100 determines whether or not the symbol read by the symbol reading unit 23 is input (Act 43). If determining that the symbol is input (Yes at Act 43), the control unit 100 acquires the merchandise code of the merchandise to which the symbol corresponding to the symbol based on the input symbol is attached (Act 44).

Then, the merchandise determination part 101 determines whether or not the merchandise is merchandise in increasing demand (Act 45). If the merchandise is determined as being merchandise in increasing demand (Yes at Act 45), then, the control unit 100 determines whether or not the customer visits the store at a number of times exceeding a limited number of times in the day (first predetermined period) based on the number of visits of the customer of the day stored in the number of visits portion 1444 of the customer master 144 (Act 46). In the embodiment, the threshold is provided to prevent bulk purchase of the merchandise in increasing demand by the same customer, and further, the number of visits of the day of the same customer is checked and, if the same customer visits at a predetermined number of times (e.g. three times) or more, the merchandise is not available. If the number of visits of the same customer does not exceed the predetermined number of times (No at Act 46), the control unit 100 acquires the threshold relating to the merchandise from the limited number portion 1435 (Act 47). Further, the control unit 100 searches the customer master 144 of the customer (the memory part corresponding to the purchase history portion 1443) and acquires the purchase history of the merchandise in the day (first predetermined period) of the customer based on the acquired customer code (Act 48).

Then, the threshold determination part 102 determines whether or not a total number of the number of the merchandise purchased in the past by the customer in the day (first predetermined period) and the number of the merchandise subjected to the sales data process in this transaction exceeds the threshold (Act 49). If the part determines that the total number does not exceed the threshold (that is, equal to or smaller than the threshold) (No at Act 49), the sales control part 103 executes the sales data process on the merchandise for which the merchandise code is acquired at Act 44 (Act 50). Then, the control unit 100 returns to Act 43 and is prepared for the next input of the symbol.

On the other hand, if the part determines that the total number exceeds the threshold (Yes at Act 49), the sales control part 103 outputs a message showing that the merchandise for which the merchandise code is acquired at Act 44 is not available any more (information representing a ban on the sale of the merchandise to the same customer) to the display unit 21 (Act 51). In this case, the sales control part 103 does not execute the sales data process on the merchandise. Then, returning to Act 43, the control unit 100 is prepared for the next input of the symbol. The customer understands that the merchandise is not available in this transaction from the message output to the display unit 21.

Note that, if the threshold in single transaction and the threshold in the first predetermined period are different, the threshold determination part 102 determines that the number of sales exceeds one of the thresholds in the determination at Act 49, and, if the number of sales is equal to or smaller than one of the thresholds, executes the process at Act 50 and, if the number of sales exceeds one of the thresholds, executes the process at Act 51. Or, at Act 45, if determining that the merchandise is not merchandise in increasing demand (No at Act 45), the control unit 100 executes process at Act 50. Or, if determining that the number of visits of the same customer exceeds the predetermined number of times (Yes at Act 46), the control unit 100 executes the process at Act 51.

Or, at Act 43, if determining that the symbol is not input (No at Act 43), the control unit 100 determines that the end button 222 is operated (Act 61). If determining that the end button 222 is operated (Yes at Act 61), the control unit 100 executes settlement process relating to the transaction based on the merchandise information stored in the merchandise information part 131 (Act 62). Then, the control unit 100 transmits the sales data including the merchandise information, the settlement information, and the customer code to the server 5 (Act 63). Then, the control unit 100 ends the process and returns to Act 41. Note that, if determining that the end button 222 is not operated (No at Act 61), the control unit 100 returns to Act 41.

As described above, the POS terminal 1 of the embodiment includes the merchandise determination part 101 that determines whether or not the merchandise is merchandise in increasing demand having the number of sales remarkably increasing within a fixed period by acquiring the merchandise code for identification of the merchandise, the threshold determination part 102 that determines whether or not the number of sales of the merchandise in increasing demand is equal to or smaller than the threshold if the merchandise is determined as being the merchandise in increasing demand, and the sales control part 103 that performs the sales data process on the merchandise if the number of sales is determined as being equal to or smaller than the threshold, and outputs information representing a ban on the sale of the merchandise to the same customer if the number of sales is determined as being larger than the threshold.

The POS terminal 1 of the above described embodiment bans the sale of the merchandise in increasing demand to the customer who exceeds the threshold with respect to the merchandise in increasing demand, and can sell the merchandise in increasing demand in the number of sales equal to or smaller than the threshold.

Further, in the embodiment, the POS terminal 1 is the self-service type POS terminal operated by the customer him- or herself. Under the present circumstances, an attendant checks the number of sales of the merchandise in increasing demand, however, the burden on the attendant may be reduced. In the case of the self-service type POS terminal 1, the merchandise in increasing demand may be sold in the number of sales not exceeding the threshold if the attendant is removed.

While certain embodiments have been described, these embodiments are presented as examples, but not intended to limit the scope of the invention. These novel embodiments may be implemented in other various forms and various omissions, replacements, changes may be made without departing from the scope of the invention. These embodiments or their modifications are within the scope of the invention and within the scope of the invention described in claims and equivalents thereof.

For example, in the embodiment, the sales management part 143 and the customer master 144 are provided in the POS terminal 1. However, the embodiment is not limited to this, and the POS terminal 1 may not be provided with the sales management part 143 and the customer master 144 and may acquire information from the sales management part 542 and the customer master 543 when necessary.

Further, in the embodiment, the threshold for the merchandise in increasing demand is stored in the limited number portion 5425 in advance. However, the embodiment is not limited to this, and for example, the threshold in response to the predetermined rate may be calculated to be changed depending on the magnitude of the predetermined rate relating to the number of sales of the merchandise stored in the number of sales of the previous day portion 5422 and the number of sales of the merchandise stored in the number of sales of the day portion 5423 (i.e., the increase rate of the sharp increase of the merchandise). In this case, it is desirable that the threshold is set to be smaller as the increase rate of the number of sales of the merchandise stored in the number of sales of the day portion 5423 to the number of sales of the merchandise stored in the number of sales of the previous day portion 5422 is larger so that many people may purchase the merchandise.

In the embodiment, the POS terminal 1 is explained as the information processing apparatus. However, the embodiment is not limited to this, and the server 5 may be the information processing apparatus. In this case, "merchandise determination part 101", "threshold determination part 102", and "sales control part 103" are elements of the server 5 and "sales control part 103" outputs information representing a ban on the sale of the merchandise to the same customer to the POS terminal 1. In this case, the server 5 may output other information than the message (e.g. information or signal for controlling the POS terminal 1 not to perform the sales data process of the merchandise) to the POS terminal 1.

In the embodiment, the POS terminal 1 is explained as the self-service type POS terminal. However, the embodiment is not limited to this, and the POS terminal 1 may be a typical POS terminal operated by the store clerk of the store S.

Note that the program executed in the POS terminal 1 of the embodiment is recorded and provided in a computer-readable recording medium such as a CD-ROM, a flexible disc (FD), a CD-R, or a DVD (Digital Versatile Disc) in a file of an installable format or an executable format.

Or, the program executed in the POS terminal 1 of the embodiment may be stored on a computer connected to a network such as the Internet, downloaded via the network, and provided. Or, the program executed in the POS terminal 1 of the embodiment may be provided or distributed via a network such as the Internet.

Or, the program executed in the POS terminal 1 of the embodiment may be incorporated in the ROM 12 or the like and provided.

## Claims

1. An information processing apparatus, comprising:
a memory that stores computer executable components; and
a processor that executes the computer executable components stored in the memory, wherein the computer executable components comprise:
a merchandise determination component for determining whether or not merchandise for which merchandise identification information for identification of the merchandise is acquired is merchandise in increasing demand having a number of sales increase within a fixed period;
a threshold determination component for determining whether or not a number of sales of the merchandise in increasing demand to a customer is equal to or smaller than a threshold if the merchandise is determined to be the merchandise in increasing demand; and
a sales control component for performing a sales data process on the merchandise if the number of sales is determined to be equal to or smaller than the threshold, and outputting information representing a ban on a sale of the merchandise to the customer if the number of sales is determined to be larger than the threshold.

2. The information processing apparatus according to claim 1, wherein the threshold determination component determines whether or not the number of sales of the merchandise in increasing demand is equal to or smaller than the threshold by comparing the number of the merchandise in increasing demand already subjected to a sales data process in single transaction with the threshold.

3. The information processing apparatus according to claim 2, wherein the threshold determination component determines whether or not the number of sales of the merchandise in increasing demand is equal to or smaller than the threshold by further comparing a number of purchases of the customer within a first predetermined period relating to the merchandise in increasing demand with the threshold.

4. The information processing apparatus according to claim 3, wherein the sales control component outputs information representing a stop of the sale of the merchandise in increasing demand to the customer if a number of visits of the customer within the first predetermined period exceeds a predetermined number of times.

5. The information processing apparatus according to claim 3 or 4, wherein the merchandise determination component compares numbers of sales of the merchandise in the first predetermined period and a preceding second predetermined period and determines that the merchandise is merchandise in increasing demand if the number of sales of the merchandise in the first predetermined period increases compared to the number of sales of the merchandise in the second predetermined period.

6. The information processing apparatus according to any one of claims 1 to 5, further comprising a POS terminal.

7. The information processing apparatus according to claim 6, further comprising a plurality of POS terminals.

8. A method of controlling sales, comprising:
merchandise determining, by a system comprising a processor, whether or not merchandise for which merchandise identification information for identification of the merchandise is acquired is merchandise in increasing demand having a number of sales increase within a fixed period;
threshold determining, by the system comprising a processor, whether or not the number of sales of the merchandise in increasing demand to a customer is equal to or smaller than a threshold if the merchandise is determined as being the merchandise in increasing demand; and
sales controlling, by the system comprising a processor, by performing a sales data process on the merchandise if the number of sales is determined as being equal to or smaller than the threshold, and outputting information representing a ban on a sale of the merchandise to the customer if the number of sales is determined as being larger than the threshold.

9. The method according to claim 8, further comprising:
determining, by the system comprising a processor, whether or not the number of sales of the merchandise in increasing demand is equal to or smaller than the threshold by comparing the number of the merchandise in increasing demand already subjected to a sales data process in single transaction with the threshold.

10. The method according to claim 9, further comprising:
determining, by the system comprising a processor, whether or not the number of sales of the merchandise in increasing demand is equal to or smaller than the threshold by further comparing a number of purchases of the customer within a first predetermined period relating to the merchandise in increasing demand with the threshold.

11. The method according to claim 10, further comprising:
outputting, by the system comprising a processor, information representing a stop of the sale of the merchandise in increasing demand to the customer if a number of visits of the customer within the first predetermined period exceeds a predetermined number of times.

12. The method according to claim 10 or 11, further comprising:
comparing, by the system comprising a processor, numbers of sales of the merchandise in the first predetermined period and a preceding second predetermined period and determines that the merchandise is merchandise in increasing demand if the number of sales of the merchandise in the first predetermined period increases compared to the number of sales of the merchandise in the second predetermined period.

13. A system for controlling sales, comprising:
the information processing apparatus according to any one of claims 1 to 5; and
at least one checkout apparatus configured to process merchandise sales.

14. The system according to claim 13, wherein the checkout apparatus is a POS terminal.

15. The system according to claim 13 or 14, further comprising a plurality of checkout apparatuses.
